# EUROPEAN PATENT SPECIFICATION

(11) **EP 0 821 027 B1**
(45) Date of publication and mention of the grant of the patent: **28.11.2001**
(21) Application number: 97112797.2
(22) Date of filing: 25.07.1997
(51) Int. Cl.: C08J 9/14, C08J 9/32, B29C 44/34, C08K 9/10, C08L 83/04

(54) **Silicone rubber sponge composition and a method for the manufacture of a silicone rubber sponge**
Silikon-Schaumgummi Zusammensetzung und Verfahren zur Herstellung eines Schwammes aus Silikongummi
Composition caoutchouc moussé de silicone et un procédé de fabrication d'une éponge de caoutchouc de silicone

(30) Priority: 25.07.1996 JP 21430196
(43) Date of publication of application: 28.01.1998
(73) Proprietor: Dow Corning Toray Silicone Company Limited, Tokyo (JP)
(72) Inventor: Hamada, Mitsuo, c/o Dow Corning Toray Sil.Co. Ltd., Ichihara-shi, Chiba Prefecture (JP); Imaizumu, Toru, c/o Dow Corning Toray Sil.Co. Ltd., Ichihara-shi, Chiba Prefecture (JP); Ishida, Koichi, c/o Dow Corning Toray Sil.Co. Ltd., Ichihara-shi, Chiba Prefecture (JP); Ozaki, Koichi, c/o Dow Corning Toray Sil.Co. Ltd., Ichihara-shi, Chiba Prefecture (JP); Yamadera, Toyohiko, Dow Corning Toray Sil.Co. Ltd., Ichihara-shi, Chiba Prefecture (JP)
(74) Representative: Fleischer, Holm Herbert, Dr.

(56) References cited:
- EP-A- 0 274 819
- EP-A- 0 458 336
- EP-A- 0 483 775
- EP-A- 0 553 843
- EP-A- 0 751 174
- EP-A- 0 820 807
- US-A- 3 960 583
- US-A- 4 495 227

## Description

The present invention relates to a silicone rubber sponge composition and a method for the manufacture of a silicone rubber sponge.

Since silicone rubber sponges have excellent heat and weather resistance and low weight, they have found wide applications, primarily for automobile parts, which make the most of their characteristics. More specifically, they have found use as various sealing and packing materials, gaskets, O-rings, and the like. In the prior art, silicone rubber compositions curable by dehydrogenation condensation reaction or thermally curable silicone rubber compositions containing a thermally decomposable foaming agent, such as azobisisobutyronitrile, have been used as the above-mentioned silicone rubber sponge compositions. However, drawbacks of the silicone rubber sponge compositions containing a thermally decomposable foaming agent are the toxicity and odor of the gas generated in the decomposition. Furthermore, the problem associated with the silicone rubber compositions curable by dehydrogenation condensation reaction was that the silicone rubber sponge had large nonuniform cells, and the silicone rubber sponge with uniform and fine cells was very difficult to obtain. As disclosed in Unexamined Japanese Patent Application Heisei 5-209080 and Japanese Patent Application Heisei 7-183553, a silicone rubber sponge having more uniform and finer cells can be obtained from a silicone rubber sponge composition containing glass spheres or hollow ceramics; or a silicone rubber sponge composition containing spheres with plastic shells enclosing a volatile substance, such as butane or isobutane. However, in order to prepare a silicone rubber sponge of the silicone rubber sponge composition containing glass spheres or hollow ceramics, it is necessary to use a mechanical grinder generating a large shear force because of a high shell strength of the glass spheres or hollow ceramics. Not only the grinder itself was complex, but the cost of the process was high. Furthermore, the drawback of the method for the preparation of a silicone rubber sponge of a silicone rubber sponge composition containing spheres with plastic shells was that the thermal resistance of the plastic itself was lower than that of the silicone rubber, and the silicone rubber sponge molding changed its color at a high temperature.

It is an object of the present invention to provide a silicone rubber sponge composition which generates no toxic gas in curing and has fine uniform cells after the curing.

The above-described object can be attained by a silicone rubber sponge composition consisting of 100 wt. parts of a liquid silicone rubber composition which generates gas in curing and 0.01-50 wt. parts of hollow particles based on 100 parts by weight of the liquid silicone rubber composition of a thermoplastic organopolysiloxane with the average unit formula RₐSiO_{(4-a)/2}, wherein R in a methyl group, a phenyl group of a 3,3,3 trifluoropropyl group, by thermally curing this silicone rubber sponge composition under mechanical shear, and by curing the silicone rubber sponge composition by heating to a temperature not lower than the softening point of the thermoplastic silicone resin.

As has been mentioned above, the present invention relates to a silicone rubber sponge composition which generates no toxic gas in curing and has fine uniform cells after the curing.

No specific restriction is imposed on the type of the liquid silicone rubber composition generating gas in curing, which is component (A) used in accordance with the present invention, provided that it is in a liquid state at normal temperature and forms a silicone rubber in curing while generating gas. Examples of such a liquid silicone rubber compositions are a liquid silicone rubber composition that can be cured by condensation and addition reactions, this composition consisting of a diorganopolysiloxane containing alkenyl groups, which is liquid at room temperature, an organosiloxane or organosilane containing silanol groups or organosiloxane, an organohydrogenpolysiloxane, a platinum catalyst, and, if necessary, a reinforcing filler and forms a silicone rubber sponge in curing while generating gaseous hydrogen, a liquid silicone rubber composition, which consists of a diorganopolysiloxane containing alkenyl groups, which is liquid at room temperature, an organohydrogenpolysiloxane, water, a platinum catalyst, and, if necessary, a reinforcing filler and forms a silicone rubber sponge in curing while generating gaseous hydrogen, and a liquid silicone rubber composition curable by condensation reaction, which consists of a diorganopolysiloxane containing silanol groups, an organohydrogenpolysiloxane, a catalyst enhancing the condensation reaction, such as a platinum catalyst, an organotin compound, an organotitanium compound, and, if necessary, a reinforcing filler and forms a silicone rubber sponge in curing while generating gaseous hydrogen. Among these compositions, the liquid silicone rubber composition that can be cured by condensation and addition reactions, is preferred since it has a high curing rate and excellent uniformity of curing. An example of the liquid silicone rubber composition that can be cured by condensation and addition reactions is a liquid silicone rubber composition consisting of: (a) a diorganopolysiloxane having at least two alkenyl groups in a molecule, (b) an organopolysiloxane having at least two hydrogen atoms bonded to a silicon atom in a molecule, (c) a polysiloxane or organosilane containing a silanol group (d) a platinum catalyst, and, if necessary, a reinforcing filler.

The diorganopolysiloxane of component (a) has at least two alkenyl groups bonded to a silicon atom in a molecule which may be selected from a vinyl group, an allyl group, and a propenyl group. Furthermore examples of organic groups other than the alkenyl group. are an alkyl group, such as a methyl group, an ethyl group, and a propyl group, an aryl group such as phenyl group and a tolyl group, and a halogenated alkyl group, such as a 3,3,3-trifluoropropyl group, and 3-chloropropyl group. The molecular structure of this component can be either a straight chain or a straight chain containing branches. No specific restriction is imposed on the molecular weight of this component, but it is preferred that its viscosity at 25°C be within a range from 100 CP to 10,000 cP. In accordance with the present invention, two or more such organopolysiloxane can be present together. The organopoly-siloxane (c)(i) or organosilane (c) (ii) containing a silanol group is a foaming agent. Under the effect of a platinum catalyst of component (d), the dehydrogenation condensation reaction proceeds between the foaming agent and hydrogen atoms bonded to silicon atoms in component (b) and this reaction produces gaseous hydrogen. The organohydrogenpolysiloxane of component (b) contains at least two, preferably three or more, hydrogen atoms bonded to a silicon atom in a molecule. The addition reaction proceeding between the organohydrogenpolysiloxane and the alkenyl groups bonded to silicon atoms in component (a) under the effect of platinum catalyst of component (d) results in crosslinking and curing of the organohydrogenpolysiloxane. Examples of an organic group bonded to a silicon atom in component (b) are an alkyl group, such as a methyl group, an ethyl group, and a propyl group, an aryl group, such as a phenyl group and a tolyl group, and a halogenated alkyl group, such as a 3,3,3-trifluoropropyl group and a 3-chloropropyl group. This component may have a straight-chain, branched, ring-like, or net-like molecular structure. No specific restriction is imposed on the molecular weight of this component, but it is preferred that its viscosity at 25°C be 3-10,000 cP. The content of this component is such that the molar ratio of hydrogen atoms bonded to silicon atoms in this component and alkenyl groups bonded to silicon atoms in component (a) is (0.5:1)-(50:1).

If this ratio is less than 0.5, good curability cannot be obtained. If it is greater than 50, the hardness of the silicone rubber sponge as a cured product becomes too high. The platinum catalyst of component (d) is used to provide for curing of the composition by addition condensation reactions. Examples of suitable catalysts are a fine platinum powder, platinum black, chloroplatinic acid, olefin complexes of chloroplatinic acid, complexes of chloroplatinic acid and alkenyl siloxane, rhodium compounds, and palladium compounds.

Various fillers may be mixed with this liquid silicone rubber composition to adjust its flowability and to increase mechanical strength of the cured product. Examples of such fillers are reinforcing fillers, such as precipitated silica, fumed silica, fired silica, colloidal calcium carbonate, and fumed titanium dioxide, non-reinforcing fillers, such as ground quartz, aluminosilicic acid, magnesium oxide, and precipitated calcium carbonate. These fillers may be subjected to hydrophobization by an organosilicon compound, such as dimethyldichlorosilane, hexamethyldisilazane, and octamethylcyclotetrasiloxane. Furthermore, if necessary, an alcohol, a pigment, an addition reaction inhibitor, a heat stabilizer, a fireproofing agent, a plasticizer, and an antisticking additive can also be added.

The hollow particles of thermoplastic silicone resin of component (B) used in accordance with the present invention are an essential component. Gas contained in the hollow particles acts as a foaming additive which enhances foaming and makes the cells uniform.

The hollow particles of thermoplastic silicone resin can be manufactured, for example, by spraying an aqueous dispersion, that contains water and a silicone resin dissolved in a solvent, in a hot gas flow to obtain water-containing silicone resin capsules, and then heat treating the silicone resin capsules to remove water therefrom. Gas can be released from the hollow particles of silicone resin by mechanical grinding or thermal melting. The softening temperature of the this resin is preferably 40-200°C, still more preferably 60-180°C. No specific restriction is imposed on the particle size of component (B), but it is preferred that the average particle size be within a range from 0.1 to 500 µm. It is even more preferred that this range be 5-50 µm. The content of component (B) is 0.01-50 wt. parts, preferably 0.1-40 wt. parts, per 100 wt. parts of the liquid silicone rubber composition which generates gas in curing (component (A)). Furthermore, it is preferred that the specific gravity of the silicone sponge which is obtained by curing the silicone rubber sponge composition consisting of component (A) and component (B) under heating be 0.1-0.9. Moreover, the hollow particles of silicone resin must be selected so that they do not swell too much under the effect of liquid silicone rubber composition.

The liquid silicone rubber composition in accordance with the present invention can be readily manufactured by uniformly mixing component (A), component (B), and, if necessary, various additives. In order to prevent the heat-induced melting of capsules which are the hollow particles of silicone resin used as component (B), it is preferred that mixing with component (A) be conducted at a temperature lower than the softening point of the silicone resin of component (B).

Reference examples and embodiments of the present invention will be explained below. The term "parts" in the reference examples and embodiments stand for weight parts; viscosity is represented by a value at a temperature of 25°C.

### Reference Example 1

A methyl phenyl polysiloxane resin consisting of methyl siloxane units and methyl phenyl siloxane units with a molar ratio thereof of 10 : 90, that is, a silicone resin (softening temperature 140°C, specific gravity 1.25), was dissolved in dichloromethane, and the resulting dichloromethane solution (concentration of solids 30 wt.%) was supplied at a feed rate of 100 cc/min together with water (feed rate 25 cc/min) into a dynamic mixer (pin mixer) where it was mixed at an impeller rate of 2000 rpm to give a dispersion. The dispersion was continuously sprayed in a spray drier using a two-flow nozzle and gaseous nitrogen as a hot gas flow. The temperature of the hot gas flow of gaseous nitrogen in this process was 80°C and the pressure was 0.5 kg/cm². The collected particles of silicone resin were immersed for 24 h into an aqueous solution consisting of 100 parts of pure water and 1 part of nonionic surfactant (trimethylnonanol adduct with ethylene oxide), and the floating hollow particles of the silicon resin were collected. The hollow particles had an average particle diameter of 20 µm and an average shell thickness of 2 µm. The hollow particles contained 1 vol.% of water in addition to gaseous nitrogen. The yield was 70%.

### Reference Example 1

A methyl phenyl polysiloxane resin consisting of methyl siloxane units and methyl phenyl siloxane units with a molar ratio thereof of 22 : 78, that is, a silicone resin (softening temperature 80°C, specific gravity 1.20), was dissolved in dichloromethane, and the resulting dichloromethane solution (concentration of solids 30 wt.%) was supplied at a feed rate of 100 cc/min together with water (feed rate 25 cc/min) into a dynamic mixer used in Embodiment 1 (sic) where it was mixed at an impeller rate of 1000 rpm to give a dispersion. The dispersion was continuously sprayed in a spray drier used in Embodiment 1 (below). The temperature of the hot gas flow of gaseous nitrogen in this process was 70°C and the pressure was 0.5 kg/cm². The collected particles of silicone resin were sorted by the same method as was used in Embodiment 1 (sic). The collected hollow particles contained gaseous nitrogen and had an average particle diameter of 40 µm and the average thickness of shell of 4 µm. The hollow particles contained 1 vol.% of water in addition to gaseous nitrogen. The yield was 60%.

### Embodiment 1

In this embodiment, 5 parts of dimethylpolysiloxane terminated on both ends of molecular chain with silanol groups, having a viscosity of 50 cP, and containing 7 parts of fumed silica with a specific surface area of 200 m²/g that was treated with hexamethyldisilazane, was added to 100 parts of dimethylpolysiloxane (content of vinyl groups 0.14 wt.%) terminated on both ends of the molecular chain with dimethylvinylsiloxy groups and having a viscosity of 1000 cP, and the components were mixed to obtain a homogeneous liquid silicone rubber base. Then, 5 parts of methyl hydrogen polysiloxane (content of hydrogen atoms bonded to silicon atoms 1.5 wt.%) terminated on both ends with trimethylsiloxy groups and having a viscosity of 20 cP, 0.4 part of a complex of chloroplatinic acid and divinyltetramethyldisiloxane (content of platinum 0.4 wt.%), and 0.2 part of 3,5-dimethyl-1-hexyne-3-ol as a curing inhibitor were added to 100 parts of this liquid silicone rubber base, and the components were mixed to give a homogeneous liquid silicone rubber composition that can be cured by dehydrogenation condensation and addition reactions. Then, 20 parts of the hollow particles of methyl phenyl polysiloxane resin with an average particle diameter of 20 µm, an average thickness of shell of 2 µm, and a softening temperature of 140°C, that was obtained in Reference Example 1, was homogeneously mixed with 100 parts of this liquid silicone rubber composition that can be cured by dehydrogenation condensation and addition reactions. The mixture was degassed, fed to a sealed extruder, and extruded under applied mechanical shear to give 3-mm beads. The beads were cured by heating for 5 min at a temperature of 100°C to give a silicone rubber sponge. The foaming ratio, specific gravity, and uniformity of cells of this silicone rubber sponge were measured. The results are presented in Table 1. For comparison, the foaming ratio, specific gravity and uniformity of cells (diameter of foam cells) were also measured for a liquid silicone rubber composition that was identical to the above-described composition with the exception that it contained no hollow particles of silicone resin. The results obtained are shown in Table 1. This table clearly shows that the silicone rubber sponge in accordance with the present invention has fine uniform cells.

**Table 1**

| Item | Embodiment 1 | Comparative Example 1 |
|---|---|---|
| Specific gravity | 0.41 | 0.41 |
| Foaming ratio | 2.4 | 2.4 |
| Foam cell diameter (mm) | 0.8-1.1 | 1.5-2.0 |

### Embodiment 2

Hollow particles of methyl phenyl polysiloxane resin with an average particle size of 40 µm, an average shell thickness of 4 µm, and a softening temperature of 80°C, that were obtained in Reference Example 2 were added in an amount of 0.5 part, 5 parts, and 10 parts to 100 parts of the liquid silicon rubber composition that can be cured by dehydrogenation condensation and addition reactions, same as was used in Embodiment 1, and the components were uniformly mixed. The mixture was degassed, placed in a sealed extruder, and extruded to obtain 3-mm beads without intensive shear. The beads were cured by heating for 5 min at 100°C to give a silicone rubber sponge. The foaming ratio, specific gravity, and uniformity of cells of this silicone rubber sponge were measured. The results are presented in Table 2. For comparison, the same measurements were also conducted for a liquid silicone rubber composition that was identical to the above-described composition with the exception that it contained no hollow particles of silicone resin. The results obtained are shown in Table 2. The silicone rubber sponge in accordance with the present invention had fine uniform cells similarly to the silicone rubber sponge of Embodiment 1.

**Table 2**

| Item | Embodiment 2 | | | Comparative Example 2 |
|---|---|---|---|---|
| Content of hollow particles of silicone resin (parts) | 0.5 | 5 | 10 | 0 |
| Specific gravity | 0.42 | 0.46 | 0.49 | 0.41 |
| Foaming ratio | 2.4 | 2.1 | 2.0 | 2.4 |
| Foam cell diameter (mm) | 0.5-0.8 | 0.3-0.6 | 0.3-0.7 | 1.5-2.0 |

The silicone rubber sponge composition in accordance with the present invention consists of a liquid silicone rubber composition, which generates gas in curing, and hollow particles of a thermoplastic silicone resin. As a result, a silicone rubber sponge obtained by curing under heating has fine uniform cells.

With the method for the manufacture of a silicone rubber sponge in accordance with the present invention, a silicone rubber sponge can be easily obtained without toxic gas generation in curing, this sponge having fine uniform cells upon curing.

## Claims

1. A composition for forming a silicone rubber sponge upon curing comprising:
(A) 100 parts by weight of a liquid silicone rubber composition which generates gas upon curing and
(B) 0.01 to 50 parts by weight, based on 100 parts of component (A), of hollow particles of a thermoplastic organopolysiloxane with the average unit formula RₐSiO_{(4-a)/2}, wherein R is a methyl group, a phenyl group or a 3,3,3-trifluoropropyl group and a is 0.8-1.8.

2. The composition of claim 1 wherein component (A) comprises silicon compounds that generate hydrogen gas by a condensation reaction upon curing.

3. The composition of claim 2 wherein component (A) comprises
(a) a diorganopolysiloxane having at least two alkenyl groups per molecule;
(b) an organopolysiloxane having at least two hydrogen atoms bond to a silicon atom per molecule;
(c)
(i) a polysiloxane containing a silanol group and/or
(ii) an organosilane containing a silanol group;
(d) a platinum catalyst; and optionally
(e) a reinforcing filler.

4. The composition of claim 2 wherein component (A) comprises
(a) a diorganopolysiloxane having alkenyl groups;
(b) an organohydrogenpolysiloxane;
(c) water;
(d) a platinum catalyst; and optionally
(e) a reinforcing filler.

5. The composition of claim 2 wherein component (A) comprises
(a) a diorganopolysiloxane containing silanol groups;
(b) an organohydrogenpolysiloxane;
(c) a platinum catalyst;
(d) an organotin compound,
(e) an organotitanium compound; and optionally
(f) a reinforcing filler.

6. A process of preparing a silicone rubber sponge, comprising:
(I) blending the components (A) and (B) as defined in the preceding claims; and
(II) heating and curing that blend.

7. The process of claim 6 wherein the blend is heated and cured under applied mechanical stress.

8. A silicone rubber sponge obtainable by the process of any of claims 6 and 7.

## Patentansprüche

1. Zusammensetzung zur Ausbildung eines Siliconkautschukschwamms durch Härten, die enthält:
(A) 100 Gewichtsteile einer flüssigen Siliconkautschukzusammensetzung, die während des Härtens Gas erzeugt, und
(B) 0,01 bis 50 Gewichtsteile, bezogen auf 100 Gewichtsteile der Komponente (A), an hohlen Teilchen eines thermoplastischen Organopolysiloxans mit der mittleren Einheitenformel RₐSiO_{(4-a)/2}, worin R eine Methylgruppe, eine Phenylgruppe oder eine 3,3,3-Trifluorpropylgruppe ist und a gleich 0,8 bis 1,8 ist.

2. Zusammensetzung nach Anspruch 1, wobei Komponente (A) Siliciumverbindungen enthält, die Wasserstoffgas durch eine Kondensationsreaktion beim Härten erzeugen.

3. Zusammensetzung nach Anspruch 2, wobei Komponente (A) enthält:
(a) ein Diorganopolysiloxan mit wenigstens zwei Alkenylgruppen pro Molekül,
(b) ein Organopolysiloxan mit wenigstens zwei Wasserstoffatomen pro Molekül, die an ein Siliciumatom gebunden sind,
(c)
(i) ein Polysiloxan mit einer Silanolgruppe und/oder
(ii) ein Organosilan mit einer Silanolgruppe,
(d) einen Platinkatalysator und gegebenenfalls
(e) einen verstärkenden Füllstoff.

4. Zusammensetzung nach Anspruch 2, wobei Komponente (A) enthält:
(a) ein Diorganopolysiloxan mit Alkenylgruppen,
(b) ein Organowasserstoffpolysiloxan,
(c) Wasser,
(d) einen Platinkatalysator und gegebenenfalls
(e) einen verstärkenden Füllstoff.

5. Zusammensetzung nach Anspruch 2, wobei Komponente (A) enthält:
(a) ein Diorganopolysiloxan mit Silanolgruppen,
(b) ein Organowasserstoffpolysiloxan,
(c) einen Platinkatalysator,
(d) eine Organozinnverbindung,
(e) eine Organotitanverbindung und gegebenenfalls
(f) einen verstärkenden Füllstoff.

6. Verfahren zur Herstellung eines Siliconkautschukschwamms, umfassend:
(I) Mischen der Komponenten (A) und (B) wie in einem der vorstehenden Ansprüche definiert und
(II) Erwärmen und Härten dieser Mischung.

7. Verfahren nach Anspruch 6, wobei die Mischung unter mechanischer Belastung erwärmt und gehärtet wird.

8. Siliconkautschukschwamm, der durch das Verfahren nach einem der Ansprüche 6 und 7 erhältlich ist.

## Revendications

1. Composition pour former une éponge de caoutchouc de silicone après durcissement comprenant :
(A) 100 parties en poids d'une composition de caoutchouc de silicone liquide qui génère du gaz après durcissement et
(B) 0,01 à 50 parties en poids, basés sur 100 parties du composant (A), de particules creuses d'un organopolysiloxane thermoplastique avec la formule unitaire moyenne RₐSiO_{(4-a)/2}, où R est un groupe méthyle, un groupe phényle ou un groupe 3,3,3-trifluoropropyle et a est compris entre 0,8 et 1,8.

2. Composition selon la revendication 1, dans laquelle le composant (A) comprend des composés de silicium qui génèrent du gaz d'hydrogène par réaction de condensation durant le durcissement.

3. Composition selon la revendication 2, dans laquelle le composant (A) comprend :
(a) un di-organopolysiloxane ayant au moins deux groupes alcényles par molécule ;
(b) un organopolysiloxane ayant au moins deux atomes d'hydrogène liés à un atome de silicium par molécule ;
(c)
(i) un polysiloxane contenant un groupe silanol et/ou
(ii) un organosilane contenant un groupe silanol ;
(d) un catalyseur platine ; et éventuellement
(e) une charge de renforcement.

4. Composition selon la revendication 2, dans laquelle le composant (A) comprend :
(a) un di-organopolysioxane ayant des groupes alcényles ;
(b) organohydrogénopolysiloxane ;
(c) de l'eau ;
(d) un catalyseur platine ; et éventuellement
(e) une charge de renforcement.

5. Composition la revendication 2, dans laquelle le composant (A) comprend :
(a) un di-organopolysiloxane contenant des groupes silanols ;
(b) un organohydrogénopolysiloxane ;
(c) un catalyseur platine ;
(d) un composé inorganotin ;
(e) un composé inorganotitate ; et éventuelllement
(f) une charge de renforcement.

6. Processus de préparation d'une éponge de caoutchouc de silicone, comprenant :
(I) l'étape consistant à mélanger des composants (A) et (B) comme défini dans les revendications précédentes ; et
(II) l'étape consistant à chauffer et durcir ce mélange.

7. Processus selon la revendication 6, dans lequel le mélange est chauffé et durci sous pression mécanique appliquée.

8. Eponge de caoutchouc de silicone pouvant être obtenue par le processus de l'une quelconque des revendications 6 et 7.
